# EUROPÄISCHE PATENTSCHRIFT

(11) **EP 1 859 865 B1**
(45) Veröffentlichungstag und Bekanntmachung des Hinweises auf die Patenterteilung: **15.06.2011**
(21) Anmeldenummer: 07107112.0
(22) Anmeldetag: 27.04.2007
(51) Int. Cl.: B01J 35/04, F01N 3/00, B01J 19/00, C01B 3/00, C01B 3/40

(54) **Katalysatorelement**
Catalytic converter element
Elément de catalyseur

(30) Priorität: 24.05.2006 DE 102006024862
(43) Veröffentlichungstag der Anmeldung: 28.11.2007
(73) Patentinhaber: J. Eberspächer GmbH & Co. KG, 73730 Esslingen (DE)
(72) Erfinder: Eberspach, Günter, 72649 Wolfschlugen (DE)
(74) Vertreter: BRP Renaud & Partner

(56) Entgegenhaltungen:
- EP-A- 1 010 462
- WO-A-2004/022481
- DE-A1- 19 907 666
- DE-U1- 8 816 500
- US-A1- 2001 026 838

## Beschreibung

Die vorliegende Erfindung betrifft ein Katalysatorelement mit mehreren im Wesentlichen parallelen Kanälen, welche im Betrieb des Katalysatorelements von Gas durchströmt sind, gemäß dem Oberbegriff des Anspruchs 1.

Bei einem Brennstoffzellensystem wird mittels partieller Oxidation in einem Reformer ein wasserstoffhaltiges Brenngas oder Synthesegas erzeugt, das dann der Anode einer Brennstoffzelle zur Verstromung zugeführt wird. Die im Reformer bei einer partiellen, katalytischen Oxidation in einen Katalysator einströmenden Gase sind im wesentlichen Kohlenwasserstoffe, Luft, Wasserdampf, Kohlenmonoxid und Kohlendioxid. Um das einströmende Gas nicht unnötig hinsichtlich seiner Zusammensetzung überwachen zu müssen, d.h. um den Prozess in einem möglichst breiten Lambdafenster betreiben zu können, kann Anodenabgas der Brennstoffzelle oder Abgas eines der Brennstoffzelle nachgeordneten Restgasbrenners zur Verbindung von Anodenabgas und Kathodenabgas rezykliert. Dadurch erhöht sich der Wasseranteil im Gas, was zur Vermeidung von Rußbildung beiträgt.

Prinzipiell arbeitet ein Katalysatorelement bei sehr hohen Temperaturen, die oftmals nahe an der Zerstörungsgrenze des das Katalysatorelement bildenden Trägermaterials und der darauf angeordneten Beschichtung liegen. Beim Eintritt des aus den genannten Bestandteilen bestehenden Gasgemisches findet auf den ersten Millimetern des mit einer katalytisch aktiven Beschichtung, dem sogenannten "washcoat", beschichteten Substrats, d.h. Trägermaterials, eine exotherme Oxidationsreaktion statt, bei der die Kohlenwasserstoffe mit Sauerstoff zu Kohlendioxid und Wasser reagieren. Im weiteren Verlauf, d.h. beim weiteren Durchströmen des Katalysatorelements, findet eine endotherme Dampfreformierung statt, bei der aus Kohlenmonoxid und Wasserdampf, Kohlendioxid und Wasserstoff gebildet wird. Insbesondere die stark exotherme Reaktion an der Eintrittsseite des Katalysatorelements reduziert jedoch die Lebensdauer desselben und insbesondere der Beschichtung, da beispielsweise in der Mitte des Katalysatorelements eine Wärmeabfuhr nach außen sehr gering ist und dadurch die aufgrund der exothermen Reaktion erzeugten hohen Temperaturen längerfristig auf die Beschichtung, d.h. den washcoat, einwirken können.

Aus der DE 199 07 666 A1 ist ein Katalysatorelement mit mehreren im Wesentlichen parallelen Kanälen bekannt, welche im Betrieb des Katalysatorelements vom Abgas durchströmt sind. Die Kanäle sind dabei von Kanalwänden begrenzt, die eine zumindest bereichweise darauf angeordnete und dem Gas ausgesetzte katalytisch aktive Beschichtung aufweisen. Dabei beginnt bei einigen Kanälen eingangsseitig die Beschichtung der Kanalwände in Strömungsrichtung axial versetzt. Das bekannte Katalysatorelement ist dabei durch einen Monolithen gebildet. Durch Bearbeiten des Monolithen lassen sich axial relativ zueinander versetzt beginnende Kanäle herstellen.

Die vorliegende Erfindung beschäftigt sich mit Problem, für ein Katalysatorelement einen Weg aufzuzeigen, der insbesondere eine preiswerte Herstellbarkeit des Katalysatorelements ermöglicht.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Substrat, d.h. das die Kanalwände bildende Trägermaterial, nicht vollständig und gleichmäßig mit einer katalytisch aktiven Beschichtung zu versehen, sondern diese eingangsseitig bei einigen der im wesentlichen parallel durch das Katalysatorelement verlaufenden Kanäle, axial versetzt beginnen zu lassen. Dies bedeutet, dass in den ersten Millimetern einige der Kanäle die katalytisch aktive Beschichtung aufweisen, während einige andere Kanäle diese Beschichtung nicht aufweisen. In den Kanälen, in denen die Beschichtung am Kanalanfang beginnt, kann die durch die exotherme Oxidationsreaktion freiwerdende Wärme durch die Kanalwand in den Gasstrom eines benachbarten Kanals übertragen werden, wobei das dort strömende Gas deutlich kälter ist als das durch die exotherme Oxidationsreaktion erhitzte Gas. Die bei der Oxidationsreaktion frei werdende Wärme kann in den Kanälen mit axial zurück versetzter Beschichtung eine Shiftreaktion in den Kanälen mit eingangsseitig sofort beginnender Beschichtung unterstützen. Auf diese Weise kann sowohl eine Überhitzung des Katalysatorelements am Eintritt als auch eine zu starke Auskühlung an den Kanalenden, verbunden mit einer erhöhten Emission durch nicht umgesetzte Kohlenwasserstoffe, verhindert werden.

Erfindungsgemäß sind mehrere Kanäle zu Kanalelementen, insbesondere zu monolithischen Kanalelementen, zusammengefasst. Derartige monolithische Kanalelemente lassen sich im Vergleich zu einzelnen Kanälen deutlich rationeller und damit kostengünstiger herstellen, wobei der im allgemeinen Gedanken der Erfindung beschriebene Effekt vergleichbar ist, sofern mehrere derartiger Kanalelemente bei einem gebauten Katalysatorelement miteinander gefügt werden und wobei einige Kanalelemente die Beschichtung beginnend an der Eintrittsseite aufweisen, während andere, vorzugsweise benachbarte, Kanalelemente, eine in Strömungsrichtung axial zurückversetzte Beschichtung aufweisen.

Bei der erfindungsgemäßen Lösung weisen die in einem Kanalelement zusammengefassten Kanäle eine an derselben Axialposition beginnende Beschichtung auf. Dies ermöglicht eine rationelle und damit kostengünstige Herstellung der Kanalelemente, da die in den Kanalelementen zusammengefasste Kanäle alle gleich aufgebaut sind.

Zweckmäßig sind die Kanalwände durch ein Substrat aus Siliciumcarbit gebildet. Siliciumcarbit bietet eine hohe Wärmeleitfähigkeit und gewährleistet dadurch einen starken Wärmeübertrag an der Eintrittsseite des Katalysatorelements von Kanälen mit direkt an der Eintrittsseite beginnenden Beschichtungen auf umliegende Kanäle, bei welchen die katalytisch aktive Beschichtung erst in Strömungsrichtung axial versetzt beginnt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen Längsschnitt durch ein erfindungsgemäßes Katalysatorelement mit mehreren Kanälen,
- Fig. 2: einen Querschnitt durch ein Katalysatorelement im Bereich seiner Eingangsseite,

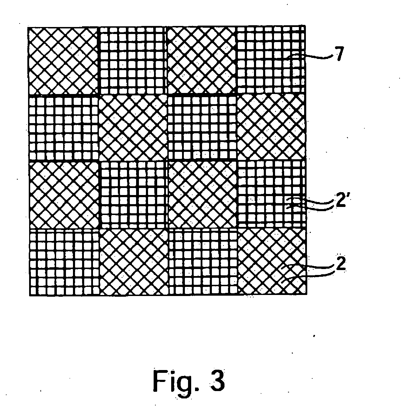

- Fig. 3: eine Darstellung wie in Fig. 2, jedoch mit mehreren Kanalelementen, die jeweils mehrere parallele Kanäle umfassen.

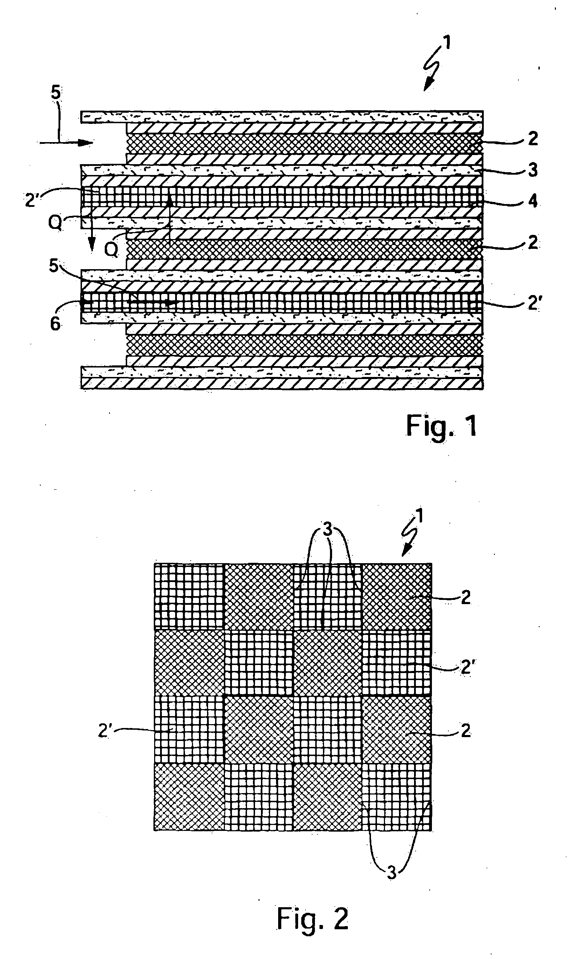

Entsprechend Fig. 1 weist ein erfindungsgemäßes Katalysatorelement 1 im wesentlichen mehrere, parallel zueinander verlaufende Kanäle 2 auf, welche im Betrieb des Katalysatorelements 1 von Gas durchströmt sind. Das das Katalysatorelement 1 durchströmende Gas kann dabei ein Gemisch aus Kohlenwasserstoff, Luft, Wasserdampf, Kohlenmonoxid und Kohlendioxid sein. Damit ein möglichst breites Gasgemisch vom Katalysatorelement 1 aufbereitet werden kann, d.h. damit der katalytische Oxidationsprozess in einem möglichst breiten Lambdafenster betrieben werden kann, wird dem Gasgemisch zusätzlich ein Anodenabgas oder ein Abgas eines Restgasbrenners zugeführt, wodurch sich der Wasseranteil im Gasgemisch erhöht und dadurch die Rußbildung zumindest reduziert werden kann.

Die das Katalysatorelement 1 durchziehenden Kanäle 2 sind gemäß der Fig. 1 von Kanalwänden 3 begrenzt, die eine zumindest bereichsweise darauf angeordnete und dem Gas ausgesetzte katalytisch aktive Beschichtung 4 aufweisen. Im Betrieb des Katalysatorelements 1 arbeitet dieses bei sehr hohen Temperaturen, welche nahe an der Zerstörungsgrenze der aus einem Substrat, beispielsweise aus Siliciumcarbit, gebildeten Kanalwände 3 und der katalytisch aktiven Beschichtung 4 liegen. Die sehr hohen Temperaturen kommen dabei durch eine stark exotherme Oxidationsreaktion zustande, bei der Kohlenwasserstoffe mit Sauerstoff zu Kohlendioxid und Wasser reagieren. Diese stark exotherme Oxidationsreaktion findet auf den ersten Millimetern der Kanäle 2 statt, wobei diese Oxidationsreaktion nur stattfindet, sofern die Kanäle 2 eine katalytisch aktive Beschichtung 4 aufweisen. Weiter stromab von einer Eingangsseite 6, d.h. in Strömungsrichtung 5, findet eine endotherme Dampfreformierung statt, bei der aus Kohlenmonoxid und Wasserdampf Kohlendioxid und Wasserstoff gebildet wird. Insbesondere die stark exotherme Reaktion an der Eingangsseite 6 der Kanäle 2 gefährdet jedoch die Lebensdauer des Katalysatorelements 1 und der Beschichtung 4, da eine erforderliche Wärmeabfuhr nach außen, insbesondere in der Mitte des Katalysatorelements 1 nicht gegeben ist.

Bei dem erfindungsgemäßen Katalysatorelement 1 beginnt deshalb bei einigen Kanälen 2 die katalytisch aktive Beschichtung 4 in Strömungsrichtung 5 axial versetzt bezüglich der Eingangsseite 6. Dies hat zur Folge, dass in den Kanälen 2', bei denen die Beschichtung 4 direkt an der Eintrittsseite 6 beginnt, die durch die exotherme Oxidationsreaktion freiwerdende Wärme Q durch die Kanalwand 3 in den Gasstrom der benachbarten Kanäle 2' übertragen werden kann. Das dort strömende Gas ist deutlich kälter (ca. 500°C), wodurch die bei der Oxidationsreaktion freiwerdende Wärme Q in den Kanälen 2 mit axial zurückversetzt Beschichtung 4 die Shiftreaktion unterstützen kann. Unter Shiftreaktion wird hierbei die Umwandlung von Kohlenmonoxid und Wasser zu Kohlendioxid und Wasserstoff verstanden. Dies entspricht somit der oben erwähnten Dampfreformierung. Durch die teilweise zurückversetzte Beschichtung 4 in einigen Kanälen 2 kann einerseits sowohl eine Überhitzung des Katalysatorelements 1 an der Eingangsseite 6 durch die stark exotherme Oxidationsreaktion vermieden werden, als auch andererseits eine zu starke Auskühlung an einem Kanalende, verbunden mit einer erhöhten Emission nicht umgesetzter Kohlenwasserstoffe, verhindert werden.

Vorzugsweise sind dabei gemäß Fig. 2 jeweils Kanäle 2 mit axial zurückversetzter Beschichtung 4 und Kanäle 2' mit direkt an der Eintrittsseite 6 beginnender Beschichtung 4 benachbart zueinander, beispielsweise in Schachbrettart, angeordnet. Denkbar ist auch, dass mehrere Kanäle 2 oder 2' zu, insbesondere monolithischen, Kanalelementen 7 zusammengefasst sind, wobei hierbei die in einem Kanalelement 7 zusammengefassten Kanäle 2 oder 2' eine jeweils an derselben Axialposition beginnenden Beschichtung 4 aufweisen.

Die katalytisch aktive Besichtung 4 ist auf der Kanalwand 3 aufgebracht, welche beispielsweise durch ein Substrat aus Siliciumcarbit gebildet ist.

Ein Einsatz des erfindungsgemäßen Katalysatorelements 1 ist beispielsweise in einem Reformer denkbar, welcher ein wasserstoffhaltiges Brenngas aus einem kohlenwasserstoffhaltigen Brennstoff und einem sauerstoffhaltigen Oxidator erzeugt. Dabei können in einem derartigen Reformer entweder ein einziges Katalysatorelement 1 oder mehrere Katalysatorelemente 1 zum Einsatz gelangen.

Zusammenfassend lassen sich die wesentlichen Merkmale der erfindungsgemäßen Lösung wie folgt charakterisieren:

Bei einem Katalysatorelement 1, welches mehrere im wesentlichen parallele Kanäle 2, 2' aufweist, ist bei einigen Kanälen 2 eine an den Kanalwänden 3 angeordnete katalytisch aktive Beschichtung 4 in Strömungsrichtung axial von einer Eintrittsseite 6 zurückversetzt angeordnet, wodurch die durch die Beschichtung hervorgerufene stark exotherm wirkende Oxidationsreaktion in diesen Kanälen erst später beginnt. Die in den Kanälen 2' bereits an der Eingangsseite 6 beginnende Beschichtung 4 bewirkt die sofortige exotherme Oxidationsreaktion, wodurch die dadurch erzeugte Wärme Q in die benachbarten Kanäle 2 abfließen kann, in welchen die Beschichtung 4 erst weiter stromab beginnt. Hierdurch wird einerseits eine Überhitzung des Katalysatorelements 1 vermieden, wodurch dessen Langlebigkeit gefördert wird und zum anderen kann dadurch die bei der Oxidationsreaktion freiwerdende Wärme Q in den Kanälen 2 mit axial zurückversetzter Beschichtung 4 die Reaktion in den benachbarten Kanälen 2', welche endotherm ist, unterstützen. Zudem kann eine zu starke Auskühlung am Kanalende, verbunden mit einer erhöhten Emission nicht umgesetzter Kohlenwasserstoffe, verhindert oder zumindest reduziert werden.

## Patentansprüche

1. Katalysatorelement (1),
- mit mehreren im wesentlichen parallelen Kanälen (2, 2'), welche im Betrieb des Katalysatorelements (1) von Gas durchströmt sind,
- wobei die Kanäle (2, 2') von Kanalwänden (3) begrenzt sind, die eine zumindest bereichsweise darauf angeordnete und dem Gas ausgesetzte katalytisch aktive Beschichtung (4) aufweisen,
- wobei eingangsseitig bei einigen Kanälen (2) die Beschichtung (4) der Kanalwände (3) in Strömungsrichtung (5) axial versetzt beginnt,
**dadurch gekennzeichnet,**
- **dass** mehrere Kanäle (2, 2') zu Kanalelementen (7) zusammengefasst sind,
- **dass** das Katalysatorelement (1) aus mehreren Kanalelementen (7) zusammengebaut ist,
- **dass** die in einem Kanalelement (7) zusammengefassten Kanäle (2, 2') eine an derselben Axialposition beginnende Beschichtung (4) aufweisen,
- **dass** benachbarte Kanalelemente (7) jeweils abwechselnd eine unterschiedliche Axialposition aufweisen, an welcher die Beschichtung (4) in Strömungsrichtung (5) gesehen beginnt.

2. Katalysatorelement nach Anspruch 1,
**dadurch gekennzeichnet,**
**dass** die Kanalwände (3) durch ein Substrat aus Siliziumcarbit SiC gebildet sind.

3. Reformer zur Erzeugung eines wasserstoffhaltigen Brenngases aus einem kohlenwasserstoffhaltigen Brennstoff und einem sauerstoffhaltigen Oxidator mit zumindest einem Katalysatorelement (1) nach Anspruch 1 oder 2.

## Claims

1. A catalytic converter element (1),
- with several substantially parallel channels (2, 2') which in operation of the catalytic converter element (1) are subjected to gas through flow,
- wherein the channels (2, 2') are delimited by channel walls (3), which comprise a catalytically active coating (4) at least in regions arranged thereon,
- wherein on the inlet side with some channels (2) the coating (4) of the channel walls (3) in flow direction (5) commences axially offset,
**characterized**
- **in that** several channels (2, 2') are combined into channel elements (7),
- **in that** the catalytic converter element (1) is assembled of several channel elements (7),
- **in that** the channels (2, 2') combined into a channel element (7) have a coating (4) commencing at the same axial position,
- **in that** neighbouring channel elements (7) in each case alternately have a different axial position at which the coating (4) seen in flow direction (5) commences.

2. The catalytic converter element according to Claim 1, **characterized in that** the channel walls (3) are formed by a substrate of silicone carbide SiC.

3. A reformer for generating a fuel gas containing hydrogen from a fuel containing hydrocarbon and an oxidant containing oxygen with at least one catalytic converter element (1) according to Claim 1 or 2.

## Revendications

1. Elément catalyseur (1),
- comprenant plusieurs canaux (2, 2') sensiblement parallèles, qui sont traversés par du gaz lorsque l'élément catalyseur (1) fonctionne,
- les canaux (2, 2') étant délimités par des parois de canal (3), lesquels présentent un revêtement (4) actif au plan catalytique, disposé dessus au moins par endroits et exposé au gaz,
- le revêtement (4) des parois de canal (3) démarrant côté entrée sur quelques canaux (2), décalés axialement dans le sens d'écoulement (5),
**caractérisé en ce que**
- plusieurs canaux (2, 2') sont regroupés en éléments de canal (7),
- **en ce que** l'élément catalyseur (1) est constitué de plusieurs éléments de canal (7),
- **en ce que** les canaux (2, 2') regroupés dans un élément de canal (7) présentent un revêtement (4) démarrant sur la même position axiale,
- **en ce que** des éléments de canal (7) voisins présentent à chaque fois alternativement une position axiale différente, sur laquelle le revêtement (4) démarre, vu dans le sens d'écoulement (5).

2. Elément catalyseur selon la revendication 1,
**caractérisé en ce que**
les parois de canal (3) sont formées par un substrat à base de carbure de silicium SiC.

3. Reformeur destiné à générer un gaz combustible contenant de l'hydrogène à base d'un combustible contenant de l'hydrocarbure et d'un oxydant contenant de l'oxygène avec au moins un élément catalyseur (1) selon la revendication 1 ou 2.
